# EUROPEAN PATENT APPLICATION

(11) **EP 4 796 430 A1**
(43) Date of publication of application: **26.08.2026**
(21) Application number: 23956189.7
(22) Date of filing: 19.10.2023
(51) Int. Cl.: B63J 4/00, B63H 21/38, B63B 17/00, B63B 25/16, B01D 53/78, F17C 9/00, F02M 21/02

(54) **FUEL PROCESSING SYSTEM AND SHIP COMPRISING SAME**

(71) Applicant: HD Korea Shipbuilding & Offshore Engineering Co., Ltd., Seongnam-si, Gyeonggi-do 13553 (KR); Hyundai Heavy Industries Co., Ltd., Ulsan 44032 (KR)
(72) Inventor: AHN, Yeong Jong, Seongnam-si Gyeonggi-do 13553 (KR); LEE, Chang Woo, Seongnam-si Gyeonggi-do 13553 (KR); HEO, Jae Gwan, Seongnam-si Gyeonggi-do 13553 (KR)
(74) Representative: Betten & Resch
(86) International application number: PCT/KR2023/016298
(87) International publication number: WO 2025/084467

(57) **Abstract**

The present invention relates to a fuel processing system and a ship comprising same, the fuel processing system comprising: a fuel supply unit that supplies fuel discharged from a fuel storage tank to a consumer; a fuel recovery unit that recovers excess fuel returned from the consumer; and a fuel processing unit that collects fuel vented from the fuel supply unit or the fuel recovery unit, wherein the fuel processing unit includes a plurality of absorption tanks that collect fuel by using water and generate waste water, and allows the fuel vented from the fuel supply unit or the fuel recovery unit to dissolve in water stored in the absorption tanks and be converted into wastewater while sequentially passing through the plurality of absorption tanks.

## Description

### [Technical Field]

The present disclosure relates to a fuel processing system and a ship comprising same.

### [Background Art]

Air pollution is becoming serious around the world, and climate change is occurring due to air pollution. Since pollutants emitted from ships have a large impact on air pollution, the International Maritime Organization (IMO), the European Union, the United States, and the like are strengthening regulations on pollutants emitted from ships in order to reduce air pollution.

As regulations on greenhouse gas emissions from ships are expected to be gradually strengthened at major milestones until 2050, it is anticipated that it will be difficult to comply with the regulations on pollutants with existing engines and fuels.

Accordingly, as strengthened regulations on greenhouse gas emissions from ships are applied, it is expected that the use of existing fossil fuels currently used will become difficult, and it is very urgent to discover alternative fuels that may satisfy the regulations to be strengthened in the future. Alternative fuels such as ammonia (NH3), biofuel, solar energy, wind energy, and the like, which are non-fossil fuels, are being considered as alternative fuels.

Among them, ammonia is a chemical substance capable of being produced, stored, transported, and supplied, and ammonia ships that use ammonia as a fuel are being developed.

Existing ammonia ships store ammonia fuel in a liquid state, and ammonia has a boiling point lower than room temperature (-33°C at atmospheric pressure), so the fuel storage tank must also have a certain specification in order to store ammonia in a liquid state. In addition, since the interior of the tank must be maintained at a low temperature to keep ammonia in a liquid state, the storage tank must be cooled, and a large amount of energy is consumed in the cooling process.

In addition, since evaporated gas may be generated inside the storage tank of liquid ammonia, there is a risk that the tank may explode due to an increase in internal pressure of the storage tank caused by the evaporated gas, and if liquid ammonia leaks outside the tank, an explosion may occur, and there is a risk of human damage due to the toxicity of ammonia.

As described above, existing ammonia ships store liquid ammonia fuel and supply ammonia fuel to an engine, and thus have limitations in that efficiency is low in terms of facility cost and operating cost, and the safety of the facility is also low.

### [Disclosure]

### [Technical Problem]

The present disclosure has been created to solve the problems of the conventional technology as described above, and is directed to providing a fuel processing system and a ship comprising the fuel processing system, which may ensure stable and highly reliable fuel supply and the like in supplying ammonia as a fuel to an engine.

### [Technical Solution]

A fuel processing system according to an aspect of the present disclosure comprises: a fuel supply unit that supplies fuel discharged from a fuel storage tank to a consumer; a fuel recovery unit that recovers excess fuel returned from the consumer; and a fuel processing unit that collects fuel vented from the fuel supply unit or the fuel recovery unit, wherein the fuel processing unit comprises a plurality of absorption tanks that collect the fuel by using water to generate waste water, and allows the fuel vented from the fuel supply unit or the fuel recovery unit to dissolve in the water stored in the plurality of absorption tanks and be converted into waste water while sequentially passing through the plurality of absorption tanks.

Specifically, the plurality of absorption tanks may have relatively lower fuel concentrations from upstream to downstream based on a flow of the fuel vented from the fuel supply unit or the fuel recovery unit.

Specifically, the plurality of absorption tanks are stacked in a height direction, and the absorption tanks may be provided to be separable from each other.

Specifically, the plurality of absorption tanks comprise a first absorption tank having water stored therein and into which the fuel vented from the fuel supply unit or the fuel recovery unit flows, and a second absorption tank having water stored therein and into which gas that has not been absorbed in water in the first absorption tank flows.

Specifically, the first absorption tank is provided below the second absorption tank and may be separated with reference to the second absorption tank when a fuel concentration in the waste water is equal to or greater than a certain level.

Specifically, the fuel processing unit may comprise an nth absorption tank having water stored therein and into which gas that has not been absorbed in water in at least the first absorption tank among the first absorption tank and the second absorption tank flows, and that discharges gas that has not been absorbed in water inside the nth absorption tank to the atmosphere at less than a predetermined concentration.

A ship according to an aspect of the present disclosure comprises the fuel processing system.

A fuel processing system according to an aspect of the present disclosure comprises: a fuel supply unit that supplies fuel discharged from a fuel storage tank to an engine; a fuel recovery unit that recovers excess fuel returned from the engine; and a purging unit that purges the fuel supply unit and the fuel recovery unit, wherein the fuel recovery unit comprises a collecting tank that stores at least a portion of the excess fuel returned from the engine, and the purging unit comprises a purging compressor that compresses purging gas, and the purging compressor compresses the purging gas and injects the compressed purging gas into the fuel supply unit so that fuel remaining in a purging target interval before and after the engine is transmitted to the collecting tank.

Specifically, the purging compressor may, upon completion of purging of the purging target interval, suck the purging gas injected into the purging target interval and transmit the purging gas to outside the purging target interval.

Specifically, the purging compressor may, upon completion of purging of the purging target interval, suck the purging gas injected into the purging target interval and transmit the purging gas to the collecting tank.

Specifically, the purging unit further comprises a purging drum that transmits purging gas to the fuel supply unit, and the purging compressor compresses the purging gas stored in the collecting tank and injects the compressed purging gas into the fuel supply unit via the purging drum so that fuel remaining in a purging target interval is transmitted to the collecting tank, and upon completion of purging of the purging target interval, in a state in which inflow from the fuel recovery unit to the collecting tank is blocked, the purging compressor may suck the purging gas stored in the purging target interval and the purging drum and transmit the purging gas to the collecting tank.

Specifically, the system comprises a purging line connecting the collecting tank and the purging drum and passing through the purging compressor, and the purging line may be provided to implement a first flow from the collecting tank to the purging drum via the purging compressor, or a second flow from the purging drum to the collecting tank via the purging compressor.

Specifically, the purging line may implement a first flow in which an inlet end of the purging compressor is connected to the collecting tank and an outlet end of the purging compressor is connected to the purging drum, or a second flow in which the inlet end of the purging compressor is connected to the purging drum and the outlet end of the purging compressor is connected to the collecting tank.

Specifically, the system further comprises a fuel processing unit that collects fuel vented from the fuel supply unit or the fuel recovery unit, and the fuel processing unit may receive and process fuel flowing into the collecting tank during purging.

Specifically, the fuel processing unit collects fuel by using water to generate fuel water and may discharge fuel at or below a predetermined concentration to an outside.

A ship according to an aspect of the present disclosure comprises the fuel processing system.

A fuel processing system according to an aspect of the present disclosure comprises a fuel supply unit that supplies fuel discharged from a fuel storage tank to a consumer, and a boiler that generates steam by using the fuel, wherein the boiler is provided with an oxidation catalyst and converts water into steam by using an oxidation exothermic reaction of the fuel.

Specifically, the system further comprises a fuel recovery unit that recovers excess fuel returned from the consumer, and at least one of the fuel supply unit and the fuel recovery unit may supply the fuel to the boiler.

Specifically, the fuel recovery unit comprises a collecting tank that stores at least a portion of the excess fuel returned from the consumer, and the collecting tank may supply at least a portion of the excess fuel flowing therein to the boiler.

Specifically, the system may comprise a mixer that mixes fuel supplied to the boiler with air and transmits the mixed fuel to the boiler.

Specifically, the mixer dilutes the fuel into air to a level equal to or lower than a lower explosion limit and supplies the diluted fuel to the boiler, and the boiler may be provided in a non-explosion-proof specification.

Specifically, the fuel recovery unit comprises a collecting tank that stores at least a portion of the excess fuel returned from the consumer, and may further comprise a buffer tank that receives the fuel from the collecting tank and transmits the fuel to the mixer or the boiler.

Specifically, the system further comprises a fuel processing unit that collects fuel discharged from the fuel supply unit or the fuel recovery unit, and the fuel processing unit collects the fuel by using water to generate waste water and may transmit the waste water to the mixer or the boiler.

Specifically, the mixer may receive gaseous fuel discharged from the fuel storage tank, mix the gaseous fuel with air, and transmit the mixed fuel to the boiler.

Specifically, the boiler may further comprise a steam generator that vaporizes water by using high-temperature exhaust gas discharged from the oxidation catalyst, and a fuel heat exchanger that heats the fuel flowing into the oxidation catalyst by using exhaust transmitted from the oxidation catalyst to the steam generator.

Specifically, the system may further comprise a preheater that preheats the fuel flowing into the mixer or the oxidation catalyst by using steam generated in the boiler.

A ship according to an aspect of the present disclosure comprises the fuel processing system.

### [Advantageous Effects]

The fuel processing system and the ship comprising the fuel processing system according to the present disclosure may exhibit excellent performance not only in efficiently supplying ammonia to an ammonia engine but also in exhaust treatment, purging, and the like.

### [Brief Description of Drawings]

FIG. 1 is a conceptual diagram of a fuel processing system according to a first embodiment of the present disclosure.
FIG. 2 is a conceptual diagram of a fuel processing system according to a second embodiment of the present disclosure.
FIG. 3 is a conceptual diagram of a fuel processing system according to a third embodiment of the present disclosure.
FIG. 4 is a conceptual diagram of a fuel processing system according to a fourth embodiment of the present disclosure.
FIG. 5 is a conceptual diagram of a fuel processing system according to a fifth embodiment of the present disclosure.
FIG. 6 is a conceptual diagram of a fuel processing system according to a sixth embodiment of the present disclosure.
FIG. 7 is a conceptual diagram of a fuel processing system according to a seventh embodiment of the present disclosure.
FIG. 8 is a conceptual diagram of a fuel processing system according to an eighth embodiment of the present disclosure.
FIG. 9 is a conceptual diagram of a fuel processing system according to a ninth embodiment of the present disclosure.
FIG. 10 is a conceptual diagram of a fuel processing system according to a tenth embodiment of the present disclosure.
FIG. 11 is a conceptual diagram of a fuel processing system according to an eleventh embodiment of the present disclosure.
FIG. 12 is a conceptual diagram of a fuel processing system according to a twelfth embodiment of the present disclosure.
FIG. 13 is a conceptual diagram of a fuel processing system according to a thirteenth embodiment of the present disclosure.
FIG. 14 is a conceptual diagram of a fuel processing system according to the thirteenth embodiment of the present disclosure.
FIG. 15 is a conceptual diagram of a fuel processing system according to a fourteenth embodiment of the present disclosure.

### [Best Modes of the Invention]

Objectives, specific advantages, and novel features of the present disclosure will become more apparent from the following detailed description and preferred embodiments in connection with the accompanying drawings. In attaching reference numerals to components in respective drawings in the present specification, it should be noted that identical components are assigned identical numerals as much as possible even when they are illustrated in different drawings. In addition, in describing the present disclosure, when it is determined that a detailed description of related known technology may unnecessarily obscure the gist of the present disclosure, the detailed description will be omitted.

Fuel in the present disclosure may be ammonia, but is not limited thereto. Fuel may include all types of substances having a relatively low boiling point and being water-soluble, such as methanol and ethanol.

The present disclosure includes a ship provided with a fuel processing system described below. In this case, the ship is a concept that includes all of an ammonia carrier, a merchant ship transporting cargo or people other than ammonia, an FSRU, an FPSO, a bunkering vessel, and an offshore plant.

Although not illustrated in the drawings of the present disclosure, it is apparent that pressure sensors PT, temperature sensors TT, flow sensors FT, and the like may be provided at appropriate positions without limitation, and measurement values from the respective sensors may be variously used without limitation in the operation of components described below.

In addition, in the drawings of the present disclosure, a straight line indicates a flow path through which various fluids such as ammonia, heat medium, and nonexplosive gas move, and may be interpreted as a pipe line.

Hereinafter, preferred embodiments of the present disclosure will be described in detail with reference to the accompanying drawings.

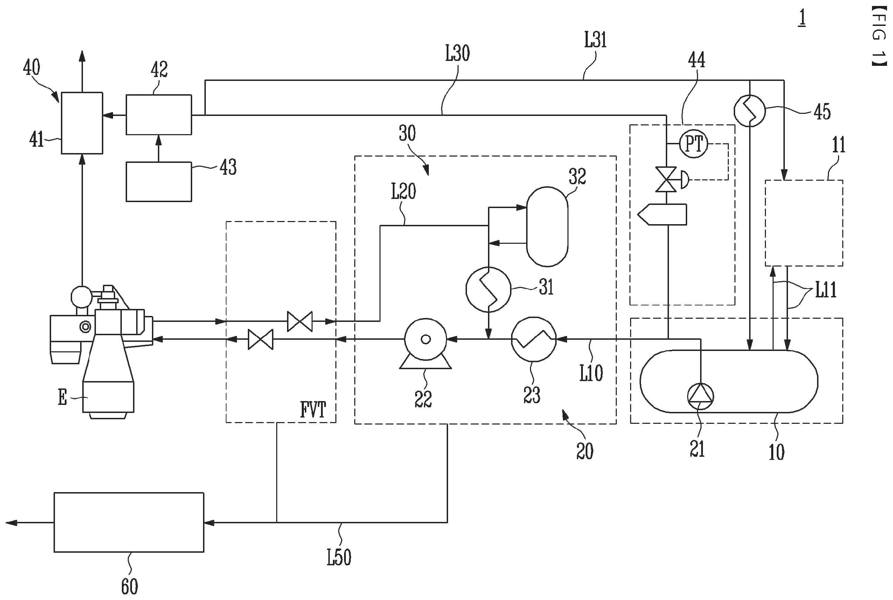

FIG. 1 is a conceptual diagram of a fuel processing system according to a first embodiment of the present disclosure.

Referring to FIG. 1, a fuel processing system 1 according to the first embodiment of the present disclosure comprises a fuel storage tank 10, a fuel supply unit 20, a fuel recovery unit 30, an exhaust processing unit 40, and a fuel processing unit 60.

The fuel storage tank 10 stores ammonia. Ammonia is used as fuel consumed by a consumer such as an engine E, and the engine E may be an ammonia-only engine E or an ammonia dual-fuel engine E, and the like. Of course, in the present specification, the engine E is interpreted as a device that obtains energy by consuming ammonia and is intended to encompass turbines and the like. In addition, the consumer includes various consumption facilities other than the engine E.

The fuel storage tank 10 stores ammonia in a liquid state, and for this purpose, thermal insulation may be applied to at least one of an interior or an exterior of the fuel storage tank 10. Alternatively, the fuel storage tank 10 may store ammonia at high pressure to prevent liquefaction of ammonia, and in this case, a low-pressure pump 21 of the fuel supply unit 20 to be described later may be reduced or omitted.

The fuel storage tank 10 may be provided to form a cargo hold inside the ship, or may be a fuel tank separately provided inside the ship or on a deck of the ship. The fuel storage tank 10 is provided as one or more tanks, and when a plurality of fuel storage tanks 10 are provided, ammonia may be consumed selectively or simultaneously.

A bunkering station (not shown) is connected to the fuel storage tank 10, and the bunkering station transmits ammonia from an external fueling source to the fuel storage tank 10. The external fueling source may be an onshore ammonia supply source or an offshore ammonia bunkering vessel, and the like.

A pressure control unit 11 may be provided in the fuel storage tank 10. The pressure control unit 11 may be a Pressure Build-up Unit (PBU) that heats or vaporizes ammonia discharged from the fuel storage tank 10 and injects the heated or vaporized ammonia into the interior of the fuel storage tank 10 to increase an internal pressure of the fuel storage tank 10, or may be a subcooler that returns ammonia after cooling or subcooling the ammonia.

In addition, the pressure control unit 11 may be a reliquefaction device 111 that reliquefies gaseous ammonia (boil-off gas) discharged from the fuel storage tank 10 and returns the reliquefied ammonia to the fuel storage tank 10. In the case of the reliquefaction device 111, the device may be connected to the fuel storage tank 10 through a gaseous processing line L11. The pressure control unit 11 may secure stability of ammonia fuel supply by increasing or decreasing an internal pressure of the fuel storage tank 10.

The fuel supply unit 20 supplies ammonia of the fuel storage tank 10 to the engine E. The fuel supply unit 20 may supply, to the engine E, liquid ammonia among the ammonia stored in the fuel storage tank 10. In particular, in consideration of specifications of the engine E that currently consumes ammonia, the fuel supply unit 20 is provided to supply ammonia in a liquid state to the engine E. Of course, the fuel supply unit 20 may variably adjust a state of ammonia in response to a change in the specifications of the engine E.

The fuel supply unit 20 comprises a low-pressure pump 21. The low-pressure pump 21 performs a function of withdrawing ammonia stored in the fuel storage tank 10 to outside and may be provided as a fixed-capacity type or a variable-capacity type (VFD), and the like.

The low-pressure pump 21 may be arranged inside the fuel storage tank 10, but unlike the drawings, may also be arranged downstream of the fuel storage tank 10. The low-pressure pump 21 may be omitted depending on the type and internal pressure of the fuel storage tank 10 as described above.

The low-pressure pump 21 may be provided in plurality to form a mutually backup-capable structure unlike the drawings, and the plurality of low-pressure pumps 21 may also be provided to operate simultaneously to share a load. Alternatively, the low-pressure pump 21 may be provided in plurality in series to utilize a multistage pressurization method.

The fuel supply unit 20 further comprises a high-pressure pump 22 and a heat exchanger 23. The high-pressure pump 22 pressurizes ammonia pressurized by the low-pressure pump 21 so as to correspond to a required pressure of the engine E. The high-pressure pump 22 may also be provided in one or more in series or in parallel as described for the low-pressure pump 21.

The high-pressure pump 22 may be provided as a variable-capacity type, and a load of the high-pressure pump 22 may be varied according to a measurement value of a flowmeter that may be provided between the low-pressure pump 21 and the high-pressure pump 22. In this case, the flowmeter may be provided at a position reflecting a flow rate of excess ammonia recovered by the fuel recovery unit 30.

The fuel recovery unit 30, which will be described later, may transmit excess ammonia discharged from the engine E to the high-pressure pump 22, and gas inflow is not desirable for the high-pressure pump 22 in terms of specifications. Accordingly, ammonia upstream of the high-pressure pump 22 is required to exist only in a liquid state, and for this purpose, temperature and pressure upstream of the high-pressure pump 22 may be effectively controlled.

An example is that ammonia recovered by the fuel recovery unit 30 may be cooled, and a pressure of ammonia upstream of the high-pressure pump 22 is maintained high to increase a boiling point of ammonia and suppress vaporization.

The heat exchanger 23 adjusts a temperature of ammonia. The heat exchanger 23 may be provided upstream of the high-pressure pump 22, that is, between the low-pressure pump 21 and the high-pressure pump 22. Alternatively, the heat exchanger 23 may be provided downstream of the high-pressure pump 22 and may also be provided both upstream and downstream of the high-pressure pump 22. The heat exchanger 23 may adjust a temperature of ammonia to correspond to a required temperature of the engine E by using an unrestricted heat medium such as glycol water GW, seawater, fresh water, or steam.

The heat exchanger 23 may be a heater that heats ammonia. Generally, a required temperature of the engine E is higher than a storage temperature of the fuel storage tank 10 (which is equal to or lower than a boiling point of ammonia at atmospheric pressure), and since temperature rise caused only by pressurization by the low-pressure pump 21 and the high-pressure pump 22 is insufficient to meet the required temperature of the engine E, the heat exchanger 23 may be used.

However, the heat exchanger 23 may be provided upstream of the high-pressure pump 22 so as to appropriately adjust a temperature of ammonia such that gaseous ammonia does not flow into the high-pressure pump 22. In this case, the heat exchanger 23 controls a heating temperature of ammonia in consideration of ammonia being recovered by the fuel recovery unit 30.

A heat medium may be supplied to the heat exchanger 23 and may be used to heat the ammonia. The heat exchanger 23 may be provided in a form in which the heat medium and ammonia exchange heat with each other.

Alternatively, the heat exchanger 23 may be a water bath type heater in which ammonia passes through a water tank containing water. In this case, the water bath type heater may be a water bath type steam heater that heats water inside the water tank into steam, or a water bath type electric heater that heats water inside the water tank by using electricity generated from a power generation engine E, and the like.

The fuel supply unit 20 comprises a valve for adjusting a supply flow rate of ammonia immediately before the engine E, and this valve may be referred to as a supply valve train SVT.

In addition, the high-pressure pump 22 and the heat exchanger 23 included in the fuel supply unit 20 are provided, and a line through which ammonia flows from the liquefied gas storage tank to the engine E may be defined as a fuel supply line L10.

The fuel recovery unit 30 recovers excess ammonia returned from the engine E. An engine E for ammonia that has been developed or is being developed currently is configured to receive ammonia in a liquid state and consume the ammonia, while receiving an additional excess amount in order to stably receive a required flow rate.

In this case, the excess ammonia may be discharged from the engine E after passing through at least a portion of the engine E, and lubricating oil used inside the engine E may be mixed into the ammonia. Accordingly, the excess ammonia discharged from the engine E is in a contaminated state, and it is not desirable to return the contaminated excess ammonia to the fuel storage tank 10.

However, since the excess ammonia is still in a state usable by the engine E, the fuel recovery unit 30 transmits the excess ammonia discharged from the engine E to the fuel supply unit 20. Specifically, the fuel recovery unit 30 may transmit excess ammonia to the high-pressure pump 22 from the fuel supply unit 20. This transmission of ammonia is performed through a fuel recovery line L20. A cooler 31 and a collecting tank 32 may be provided in the fuel recovery line L20.

The cooler 31 cools the excess ammonia discharged from the engine E. Since the excess ammonia has passed through the engine E, the excess ammonia may be in a heated state due to heat generation of the engine E, and if the excess ammonia is returned as it is and flows into the high-pressure pump 22, gaseous inflow into the high-pressure pump 22 may occur. Accordingly, the cooler 31 cools the excess ammonia by using fresh water or the like and transmits the cooled excess ammonia to between the low-pressure pump 21 and the high-pressure pump 22 in the fuel supply unit 20 so as to suppress gaseous ammonia from flowing into the high-pressure pump 22.

The collecting tank 32 is provided in parallel with a portion of the fuel recovery line L20 and temporarily stores ammonia. The collecting tank 32 is branched and connected upstream of the high-pressure pump 22 based on a flow of ammonia transmitted from the engine E to the high-pressure pump 22. The collecting tank 32 may store at least a portion of the excess ammonia returned from the engine E and may perform gas-liquid separation so that gaseous ammonia does not flow into the high-pressure pump 22.

In addition, the collecting tank 32 may be provided to remove lubricating oil contained in the excess ammonia. The collecting tank 32 may have a structure including a gas-liquid separator and a knockout drum. In this case, the excess ammonia first flows into the gas-liquid separator so that gaseous ammonia is separated, and at least a portion of liquid excess ammonia flows into the knockout drum so that lubricating oil is separated. That is, although separation of gas and lubricating oil as described above may be performed by separate components, for convenience, a configuration that implements such functions may be collectively referred to as the collecting tank 32.

The fuel recovery unit 30 comprises a valve for adjusting a return flow rate of ammonia immediately after the engine E, and this valve may be referred to as a return valve train RVT. In particular, the fuel supply valve train SVT and the return valve train RVT may be collectively defined as a fuel valve train FVT.

The exhaust processing unit 40 processes exhaust discharged from the engine E. The exhaust of the engine E may contain environmental pollutants such as various particles and nitrogen oxides NOx, and the exhaust processing unit 40 may appropriately treat the pollutants in the exhaust by using filtering, chemical reactions, and the like.

For example, the exhaust processing unit 40 may be a selective catalytic reduction device SCR 41 or an SCR 41 scrubber, and the like. However, in the present embodiment, the exhaust processing unit 40 may be provided to comprise at least the SCR 41, and may use ammonia or the like as a reducing agent.

The reducing agent used by the exhaust processing unit 40 may be supplied separately from outside or may be transmitted from the fuel supply unit 20 or the like. The fuel supply unit 20 may transmit at least a portion of ammonia flowing toward the engine E to the exhaust processing unit 40.

Accordingly, the exhaust processing unit 40 may use at least a portion of the ammonia supplied to the engine E by the fuel supply unit 20 as a reducing agent. For this purpose, a fuel transmission line L30 may be provided between the fuel supply unit 20 and the exhaust processing unit 40.

The fuel transmission line L30 may be branched from the fuel supply line L10 between the low-pressure pump 21 and the high-pressure pump 22 and may comprise a filter, a pressure control valve PCV, and the like. For reference, a filter, a pressure control valve, and the like for transmitting ammonia to the SCR 41 may be collectively defined as an ammonia transmission unit 44.

In addition, the fuel transmission line L30 may pass through a dosing unit 42 so that an appropriate amount of ammonia is supplied to the SCR 41. The dosing unit 42 may adjust an amount of ammonia supplied to the SCR 41 and may also adjust a concentration of ammonia as the reducing agent.

For this purpose, the dosing unit 42 may mix compressed air into ammonia. The exhaust processing unit 40 may further comprise an air supply unit 43 that supplies compressed air to the dosing unit 42, and the air supply unit 43 may be an air fan, an air compressor, or the like.

The dosing unit 42 may mix compressed air and ammonia and may supply a reducing agent having an appropriate ammonia ratio to the SCR 41. The nitrogen oxides of the exhaust of the engine E are efficiently removed through this.

The exhaust processing unit 40 may comprise a fuel return line L31 that returns fuel from the fuel transmission line L30 to the fuel storage tank 10. The fuel return line L31 may recover a portion of ammonia upstream of the dosing unit 42 to the fuel storage tank 10. Through this, the exhaust processing unit 40 may have a pressure control function for the fuel storage tank 10.

In particular, a return heat exchanger 45 may be provided in the fuel return line L31. When the fuel storage tank 10 is in a low-pressure state, the return heat exchanger 45 may heat at least a portion of ammonia transmitted through the fuel transmission line L30 so as to restore an internal pressure of the fuel storage tank 10 to an appropriate level.

Of course, since the fuel return line L31 may be provided to pass through the return heat exchanger 45 or to bypass at least a portion of the return heat exchanger 45, the exhaust processing unit 40 may be used to maintain a pressure of the fuel storage tank 10 within a certain range.

In addition, the fuel return line L31 may be connected to the pressure control unit 11. The pressure control unit 11 may be a reliquefaction device 111, and the fuel return line L31 may transmit at least a portion of ammonia flowing along the fuel transmission line L30 to the pressure control unit 11 so that the ammonia is liquefied or subcooled and then returned to the fuel storage tank 10. This process may be performed when the internal pressure of the fuel storage tank 10 is high.

The exhaust processing unit 40 may discharge the exhaust to the atmosphere after sufficiently purifying the exhaust of the engine E. The exhaust purified by the exhaust processing unit 40 is discharged to the outside through a funnel having a predetermined height so that the exhaust does not cause harm to people.

The fuel processing unit 60 may store ammonia discharged at a time of a normal stop or an emergency stop in portions where ammonia is stored or flows. The fuel processing unit 60 may use water to efficiently process ammonia.

Ammonia is easily dissolved in water and is converted into ammonia water, that is, waste water. By utilizing this, the fuel processing unit 60 may collect ammonia discharged from the fuel supply unit 20, the fuel recovery unit 30, or the like by dissolving the ammonia in water.

The fuel processing unit 60 may be a scrubber 61 that sprays water to ammonia so that the ammonia is converted into ammonia water and collected. In addition, the fuel processing unit 60 may be an absorption tank 62 that collects ammonia by using water and generates ammonia water. Of course, the fuel processing unit 60 may be in a form in which the scrubber 61 and the absorption tank 62 are combined.

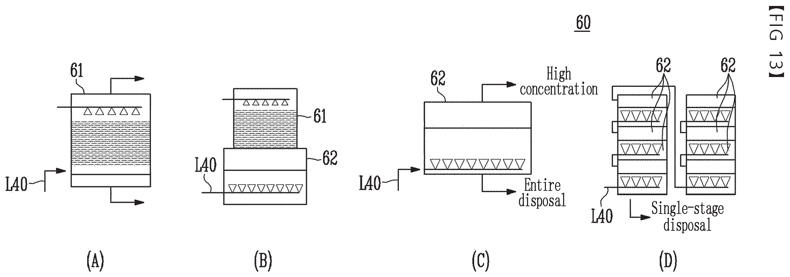

The fuel processing unit 60 of the present disclosure will be described in detail in another embodiment with reference to FIG. 13 and the like below, and a more detailed description is omitted here. The contents of the fuel processing unit 60 described in FIG. 13 and the like may be applied to all embodiments included in the present disclosure.

As described above, the present embodiment may supply at least a portion of ammonia supplied as fuel to the engine E to the SCR 41, and may appropriately control a pressure of the fuel storage tank 10 by heating or cooling at least a portion of the ammonia transmitted to the SCR 41 and recovering the ammonia to the fuel storage tank 10.

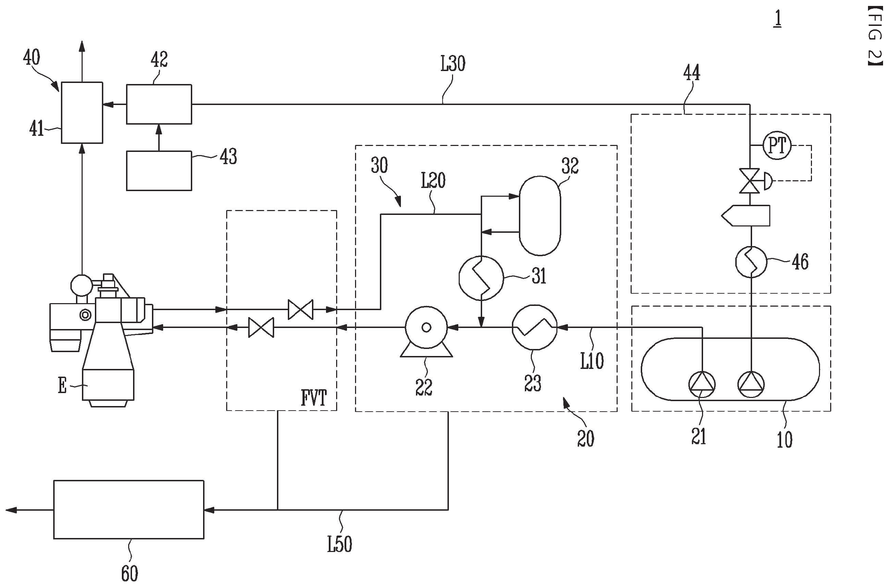

FIG. 2 is a conceptual diagram of a fuel processing system according to a second embodiment of the present disclosure.

In the following description, differences of the present embodiment from the previous embodiment will be mainly described, and portions for which the description is omitted are replaced with the previous description. This also applies to the other embodiments described below.

Referring to FIG. 2, in the case of the fuel processing system 1 according to the second embodiment of the present disclosure, the fuel transmission line L30 may extend from the fuel storage tank 10 instead of being branched from the fuel supply line L10. In this case, a pump (reference numeral not shown) for supplying ammonia as a reducing agent to the SCR 41 may be provided at an inlet end of the fuel transmission line L30.

In addition, a filter and a pressure control valve may be installed in the fuel transmission line L30 as described above. Additionally, a transmission heat exchanger 46 may be provided in the fuel transmission line L30 so that a temperature of ammonia supplied to the SCR 41 may be appropriately adjusted.

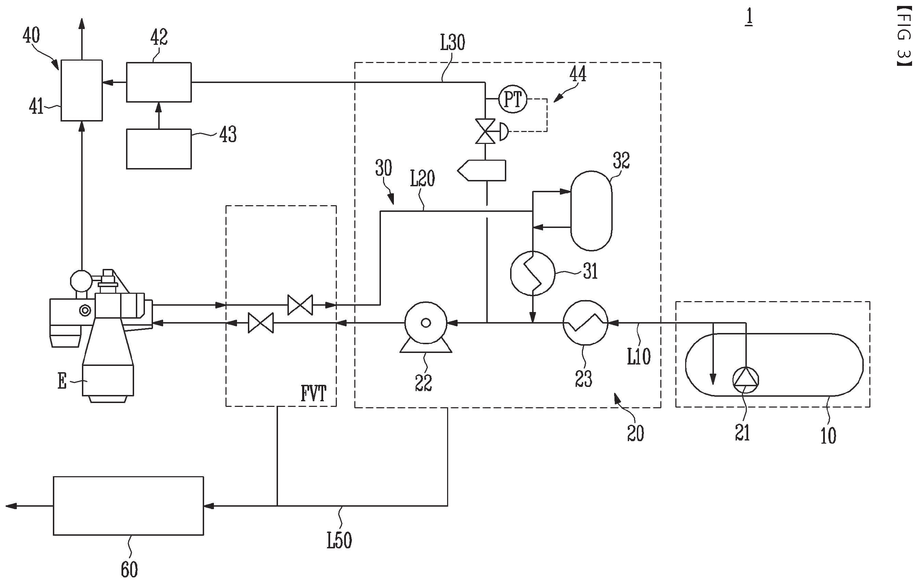

FIG. 3 is a conceptual diagram of a fuel processing system according to a third embodiment of the present disclosure.

Referring to FIG. 3, the fuel processing system 1 according to the third embodiment of the present disclosure is similar to the first embodiment in that the fuel transmission line L30 is branched from the fuel supply line L10 between the low-pressure pump 21 and the high-pressure pump 22.

However, in the present embodiment, the fuel transmission line L30 may be branched downstream of a point where the fuel recovery line L20 joins the fuel supply line L10, which point is located between the heat exchanger 23 and the high-pressure pump 22 in the fuel supply unit 20.

In this case, ammonia introduced into the fuel transmission line L30 may have a state corresponding to a temperature and a pressure of ammonia introduced into the high-pressure pump 22. Accordingly, the pressure control valve provided in the fuel transmission line L30 may generally perform a pressure reduction function.

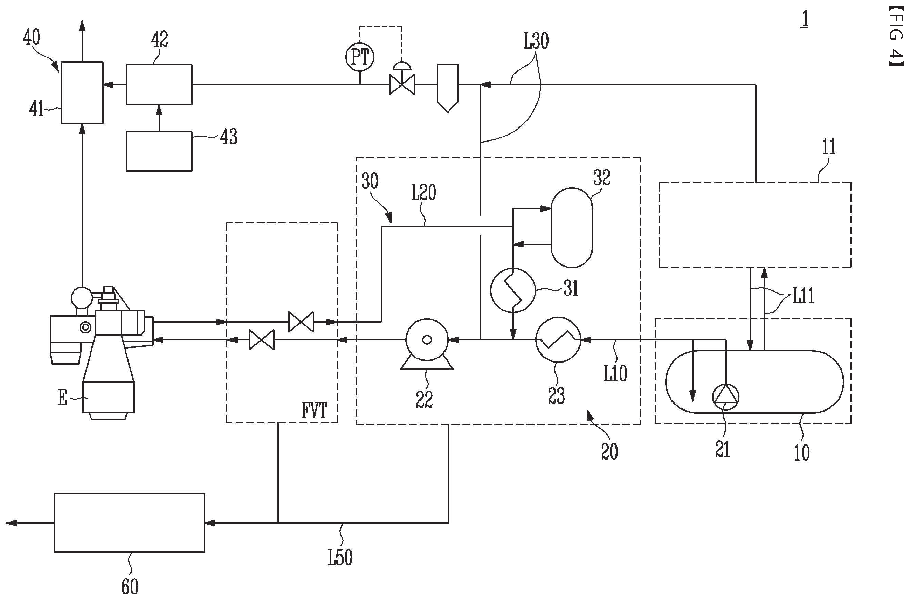

FIG. 4 is a conceptual diagram of a fuel processing system according to a fourth embodiment of the present disclosure.

Referring to FIG. 4, in the fuel processing system 1 according to the fourth embodiment of the present disclosure, the fuel transmission line L30 is additionally extended from the pressure control unit 11 compared with the case of the third embodiment.

The pressure control unit 11 may be a reliquefaction device 111, and ammonia discharged in a gaseous state from the fuel storage tank 10 and compressed and cooled in the reliquefaction device 111 may be transmitted to the SCR 41 through the fuel transmission line L30 immediately before being depressurized. Through this, the pressure control unit 11 of the present embodiment may increase reliquefaction efficiency by preventing unnecessary depressurization.

In this case, a filter and a pressure control valve may be provided in the fuel transmission line L30, and the filter and the like may be provided downstream of a point where ammonia flowing from the reliquefaction device 111 and ammonia flowing from upstream of the high-pressure pump 22 may join.

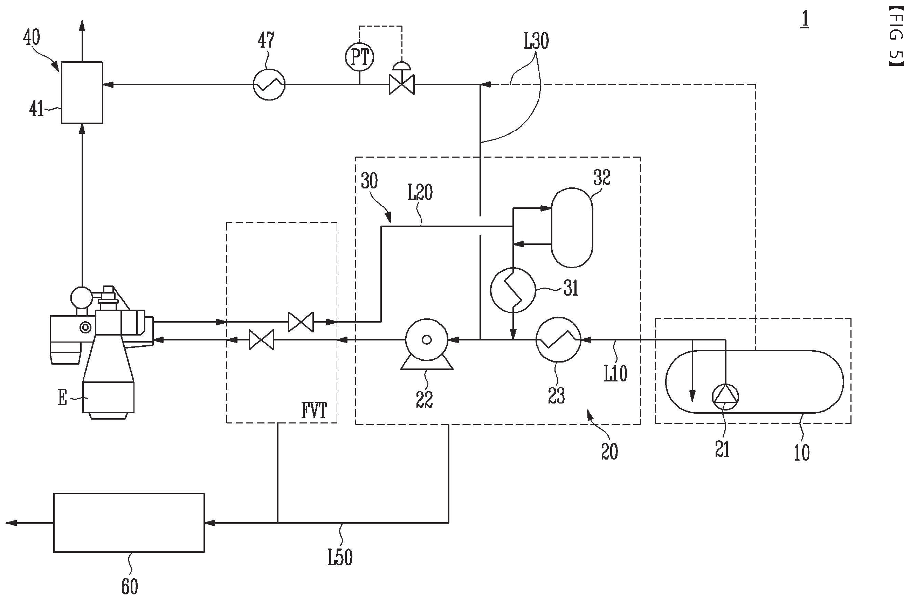

FIG. 5 is a conceptual diagram of a fuel processing system according to a fifth embodiment of the present disclosure.

Referring to FIG. 5, the fuel processing system 1 according to the fifth embodiment of the present disclosure comprises an exhaust processing unit 40 configured to transmit ammonia to the SCR 41 upstream of the high-pressure pump 22, as in the third embodiment.

However, the exhaust processing unit 40 of the present embodiment may use a vaporizer 47 instead of the dosing unit 42. That is, unlike the other embodiments in which the exhaust processing unit 40 supplies ammonia in a liquid state to the SCR 41, the exhaust processing unit 40 may supply ammonia in a gaseous state to the SCR 41. In this case, the exhaust processing unit 40 may more efficiently control a flow rate of ammonia supplied to the SCR 41.

In addition, the exhaust processing unit 40 may receive gaseous ammonia generated in the fuel storage tank 10 and may transmit the gaseous ammonia to the SCR 41. Through this, the exhaust processing unit 40 may relieve an overpressure of the fuel storage tank 10 and may achieve an effect of controlling a pressure of the fuel storage tank 10.

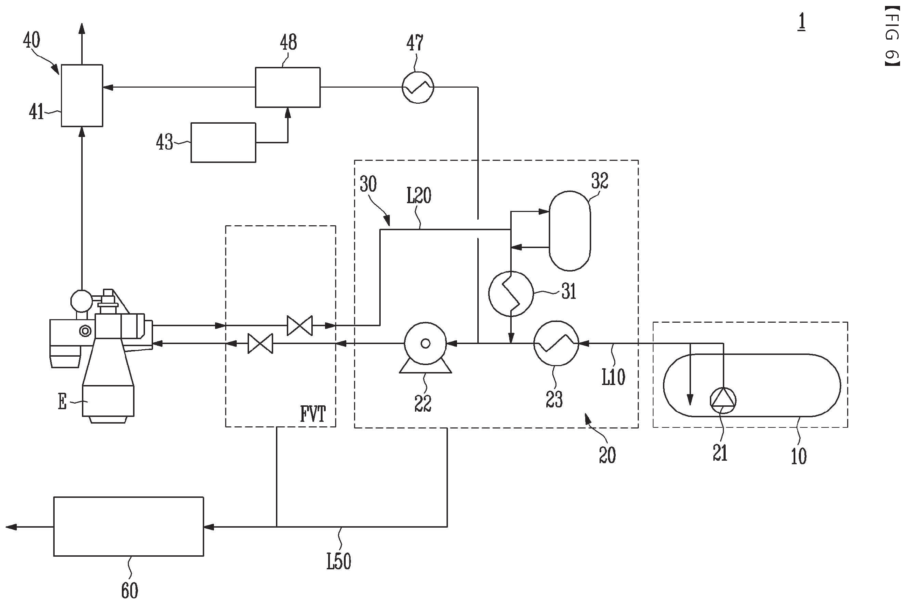

FIG. 6 is a conceptual diagram of a fuel processing system according to a sixth embodiment of the present disclosure.

Referring to FIG. 6, the fuel processing system 1 according to the sixth embodiment of the present disclosure may vaporize ammonia of the fuel supply unit 20 and may supply the vaporized ammonia to the SCR 41, as described for the fifth embodiment.

Furthermore, the present embodiment may comprise an air supply unit 43 and may comprise an ammonia/air mixer 48 downstream of the vaporizer 47. The exhaust processing unit 40 using the ammonia/air mixer 48 may dilute ammonia vaporized in the vaporizer 47 with air and may supply the diluted ammonia to the SCR 41.

In this manner, the exhaust processing unit 40 of the present embodiment may improve mixing efficiency by diluting ammonia with air. In addition, since a concentration of ammonia may be lowered by dilution, requirements for a safety system may be reduced.

In addition, the present disclosure may further comprise, as a separate embodiment, utilizing ammonia discharged from the fuel supply unit 20 or the fuel recovery unit 30 as a reducing agent.

That is, at least a portion of ammonia transmitted to an exhaust mast (not shown) may be transmitted to the SCR 41 by the exhaust processing unit 40 and may be used to purify nitrogen oxides included in the exhaust of the engine E.

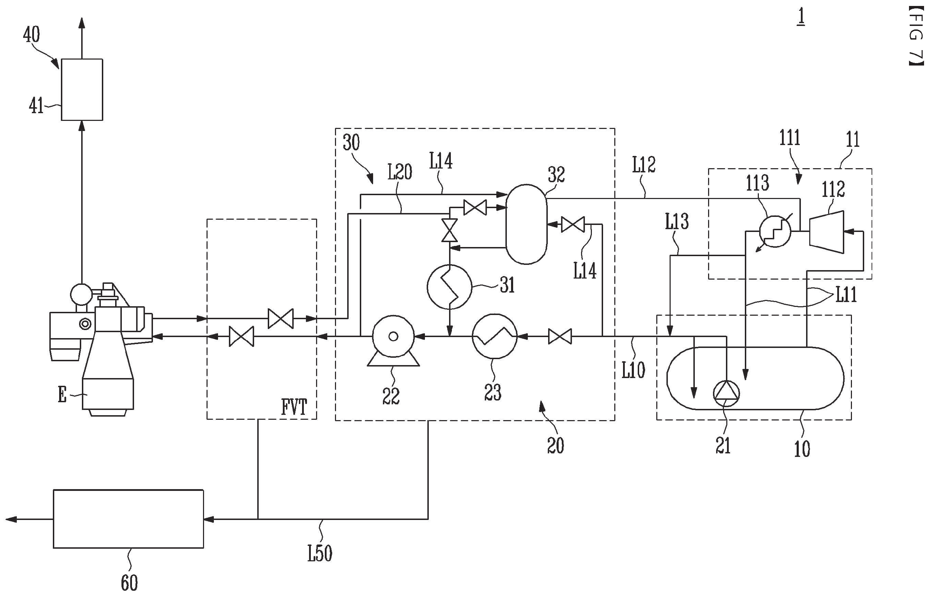

FIG. 7 is a conceptual diagram of a fuel processing system according to a seventh embodiment of the present disclosure.

Referring to FIG. 7, the fuel processing system 1 according to the seventh embodiment of the present disclosure differs from the other embodiments in that the collecting tank 32 implements a condensation function.

The collecting tank 32 of the present embodiment may receive gaseous ammonia discharged from the fuel storage tank 10 and may implement a condenser function to reliquefy the gaseous ammonia. Excess ammonia returned from the engine E may be stored in a liquid state in the collecting tank 32. Although the excess ammonia introduced from the engine E into the collecting tank 32 is in a relatively high-temperature state because it does not pass through the cooler 31, the excess ammonia may remain in a liquid state due to a high pressure, so the gaseous ammonia introduced into the collecting tank 32 from the fuel storage tank 10 may also be liquefied in the collecting tank 32.

The present embodiment may use the reliquefaction device 111 as the pressure control unit 11, and the reliquefaction device 111 may comprise a compressor 112 and a condenser 113 to reliquefy gaseous ammonia discharged from the fuel storage tank 10.

The gaseous ammonia compressed in the compressor 112 may be transmitted to the collecting tank 32 through a gaseous transmission line L12 and may be converted into a liquid state under an internal pressure of the collecting tank 32. That is, ammonia generated in the fuel storage tank 10 flows into the collecting tank 32 through a portion of the gaseous processing line L11, the compressor 112, and the gaseous transmission line L12.

However, in order to increase liquefaction efficiency of the gaseous ammonia, liquid ammonia upstream of the high-pressure pump 22 may flow into the collecting tank 32 in addition to the high-temperature excess ammonia introduced from the engine E. For this purpose, a fuel branch line L14 may be provided upstream of the heat exchanger 23 in the fuel supply line L10.

Accordingly, the fuel supply unit 20 may transmit at least a portion of liquid ammonia of the fuel storage tank 10 to the collecting tank 32 upstream of the high-pressure pump 22 and the heat exchanger 23. Therefore, the collecting tank 32 may maintain a pressure and temperature at which condensation is possible when gaseous ammonia flows in.

When an internal pressure of the collecting tank 32 increases, a boiling point of ammonia increases, which is advantageous for liquefaction. In addition, excess ammonia is recovered from the collecting tank 32 to the high-pressure pump 22, and by maintaining a high internal pressure of the collecting tank 32, an inlet pressure of the high-pressure pump 22 increases, so a possibility of gaseous inflow into the high-pressure pump 22 may be reduced.

To increase an internal pressure of the collecting tank 32, the fuel supply unit 20 may transmit at least a portion of ammonia pressurized by the high-pressure pump 22 to the collecting tank 32. That is, in addition to the fuel branch line L14 being connected to the collecting tank 32 upstream of the heat exchanger 23, the fuel branch line L14 may also be connected to the collecting tank 32 downstream of the high-pressure pump 22. The former fuel branch line L14 may be a low-pressure line, and the latter fuel branch line L14 may be a high-pressure line.

Accordingly, the collecting tank 32 stores at least a portion of excess high-temperature and high-pressure liquid ammonia returned from the engine E, receives low-temperature and low-pressure liquid ammonia upstream of the heat exchanger 23, and further receives high-temperature and high-pressure liquid ammonia downstream of the high-pressure pump 22.

The collecting tank 32 may maintain an appropriate internal pressure and internal temperature as inflow of liquid ammonia is controlled on the basis of various sensors, and gaseous ammonia branched from the reliquefaction device 111 may flow into the collecting tank 32 so that condensation of the gaseous ammonia may occur.

Therefore, in the present embodiment, because the reliquefaction device 111 liquefies gaseous ammonia discharged from the fuel storage tank 10 and recovers the liquefied ammonia to the fuel storage tank 10, or compresses the gaseous ammonia and transmits the compressed gaseous ammonia to the collecting tank 32, a load of the condenser 113 included in the reliquefaction device 111 may be reduced.

In addition, the reliquefaction device 111 may transmit at least a portion of the liquefied ammonia to the fuel supply unit 20 while bypassing the fuel storage tank 10 instead of recovering the liquefied ammonia to the fuel storage tank 10. When the liquefied ammonia from the reliquefaction device 111 flows into an interior of the fuel storage tank 10, the liquefied ammonia is depressurized to an internal pressure of the fuel storage tank 10, and at this time, flash gas is generated and gaseous ammonia is reproduced.

In contrast, in the present embodiment, by transmitting a portion of the liquefied ammonia to the heat exchanger 23 to be directly used as fuel instead of injecting the liquefied ammonia into the fuel storage tank 10, generation of flash gas in the fuel storage tank 10 may be suppressed, thereby improving reliquefaction efficiency. For this purpose, the reliquefaction device 111 has a liquid transmission line L13 branched from the gaseous processing line L11 connected to the fuel storage tank 10 downstream of the condenser 113. The liquid transmission line L13 has one end extending downstream of the condenser 113 and the other end connected to the fuel supply line L10 so that the liquefied ammonia may be delivered to an upstream side of the heat exchanger 23 in the fuel supply unit 20.

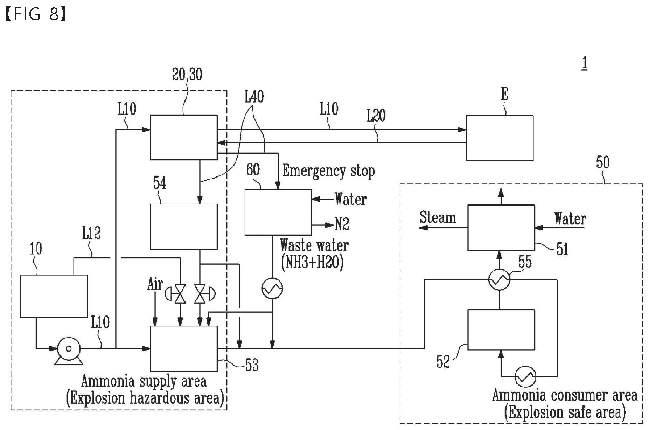

FIG. 8 is a conceptual diagram of a fuel processing system according to an eighth embodiment of the present disclosure.

Referring to FIG. 8, the fuel processing system 1 according to an eighth embodiment of the present disclosure further comprises a boiler 50 that generates steam by using ammonia.

In this case, instead of generating steam by burning ammonia together with other fuels such as HFO, MGO, LNG, or LPG to boil water, the boiler 50 is provided with an oxidation catalyst 52 and may use an oxidation exothermic reaction of ammonia.

That is, the boiler 50 converts water into steam by using heat generated when ammonia flowing into the oxidation catalyst 52 undergoes an oxidation reaction, thereby utilizing exothermic heat generated from the oxidized ammonia. Accordingly, the boiler 50 is provided with the oxidation catalyst 52 together with a steam generator 51.

The boiler 50 may generate steam by receiving ammonia from at least one of the fuel supply unit 20 and the fuel recovery unit 30. For example, the boiler 50 receives ammonia through the fuel supply line L10 branched from an upstream portion of the low-pressure pump 21 in the fuel supply unit 20.

In addition, the gaseous processing line L11, through which gaseous ammonia is discharged from the fuel storage tank 10, may also transmit ammonia to the boiler 50. That is, the gaseous processing line L11 extends from the fuel storage tank 10 or from the pressure control unit 11 (for example, the reliquefaction device 111) toward the boiler 50 so that gaseous ammonia is supplied as fuel to the boiler 50.

The boiler 50 comprises a mixer 53. The mixer 53 mixes liquid ammonia transmitted from the fuel supply unit 20 or the fuel recovery unit 30, or gaseous ammonia transmitted from the pressure control unit, with air so that ammonia may be maintained at a concentration below the lower explosion limit (LEL) and then transmitted to the boiler 50.

A conventional boiler using a combustion method is required to maintain the concentration of ammonia above a certain level, but in the present embodiment, ammonia may generate heat even at a low concentration because the oxidation catalyst 52 is used.

Accordingly, the present embodiment may eliminate explosion risk by diluting the concentration of ammonia introduced into the boiler 50 with air. Through this, the area in which the boiler 50 of the present embodiment is provided becomes an explosion safe area, and thus the system may be simplified by applying a Gas Safe Machinery Space (a lower grade than an ESD-Protected Machinery Safe Space). In addition, the boiler 50 may be configured with non-explosion-proof specifications. Further, not only the boiler 50 but also all electrical equipment provided in a room where the boiler 50 is installed may be configured with non-explosion-proof specifications. Moreover, when human access is restricted, the room provided for explosion safety may also be unnecessary.

Ammonia may be delivered from the fuel recovery unit 30 to the boiler 50 through the collecting tank 32. That is, the collecting tank 32 may supply at least a portion of excess ammonia introduced therein to the boiler 50.

The boiler 50 may comprise a buffer tank 54, and the buffer tank 54 may receive ammonia from the collecting tank 32 and deliver the ammonia to the mixer 53 or the boiler 50. Ammonia may flow into the collecting tank 32 during a normal stop of the ammonia fuel supply, and in this case, the ammonia in the collecting tank 32 is introduced into the boiler 50 through the buffer tank 54.

In addition, the fuel processing system 1 of the present disclosure may deliver ammonia from the fuel processing unit 60 to the boiler 50. As described above, the fuel processing unit 60 may capture ammonia discharged from the fuel supply unit 20 or the fuel recovery unit 30 during an emergency stop, and the ammonia captured by the fuel processing unit 60 is delivered to the boiler 50 via the mixer 53 when necessary.

However, since the ammonia captured by the fuel processing unit 60 may be in the form of ammonia water, the ammonia water is delivered to the mixer 53 or the boiler 50. In this case, a dryer (reference numeral not shown) may be provided downstream of the fuel processing unit 60 to remove the water by vaporizing the water or by other means so as to convert the ammonia water into ammonia.

The boiler 50 may heat ammonia introduced into the oxidation catalyst 52 by using high-temperature exhaust gas of 300 °C or higher downstream of the oxidation catalyst 52 in order to improve steam generation efficiency. In this case, the exhaust gas may include water and nitrogen.

A fuel heat exchanger 55 is provided downstream of the oxidation catalyst 52, and the fuel heat exchanger 55 may heat ammonia introduced into the oxidation catalyst 52 from the mixer 53 by using the high-temperature exhaust gas delivered from the oxidation catalyst 52 to the steam generator 51.

As described above, the present embodiment generates steam by utilizing heat generated through an oxidation reaction instead of burning ammonia, thereby keeping the ammonia introduced into the boiler 50 below the lower explosion limit (LEL). Accordingly, the boiler 50 may be configured as non-explosion-proof, and the space in which the boiler 50 is arranged may also be defined as an explosion safe area, thereby eliminating the need for explosion-proof equipment and explosion-proof protective facilities.

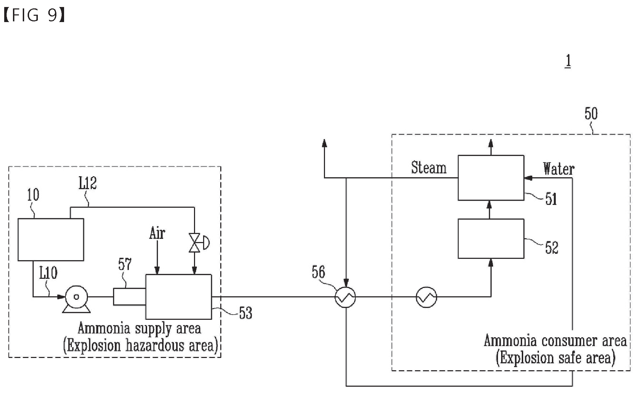

FIG. 9 is a conceptual diagram of a fuel processing system according to a ninth embodiment of the present disclosure.

In the following descriptions of FIGS. 9 to 12, although the embodiments include the boiler 50 described with reference to FIG. 8, certain configurations differ from those of FIG. 8. Referring to FIG. 9, the fuel processing system 1 according to a ninth embodiment of the present disclosure includes a preheater 56 and an atomizer 57, in contrast with the eighth embodiment.

The preheater 56 preheats ammonia introduced into the oxidation catalyst 52. Although the eighth embodiment may also implement a preheating function by including a heater (reference numeral not shown) upstream of the oxidation catalyst 52, the preheater 56 of the present embodiment differs in that it uses steam generated by the boiler 50 that consumes ammonia.

That is, the preheater 56 of the present embodiment receives at least a portion of the remaining steam discharged from the steam generator 51, excluding a flow rate supplied to a steam-consuming device. Accordingly, the preheater 56 may heat ammonia mixed with air by the mixer 53 before the ammonia is introduced into the oxidation catalyst 52.

As shown in the drawings, the present embodiment may further include a heater between the preheater 56 and the oxidation catalyst 52. Thus, ammonia mixed with air in the mixer 53 is primarily preheated by steam and may be secondarily preheated by a heater using any unrestricted heat source (excluding steam). The ammonia that has been secondarily preheated is oxidized in the oxidation catalyst 52 and generates heat, thereby contributing to steam generation.

Meanwhile, the heater may also be configured to use steam. Accordingly, in the present embodiment, ammonia discharged from the mixer 53 is primarily preheated by steam in the preheater 56 and may be secondarily preheated by steam in the heater. At this time, an amount of steam supplied from the steam generator 51 to the preheater 56 and the heater may be actively controlled based on a temperature of the ammonia, and required temperatures and required flow rates of steam.

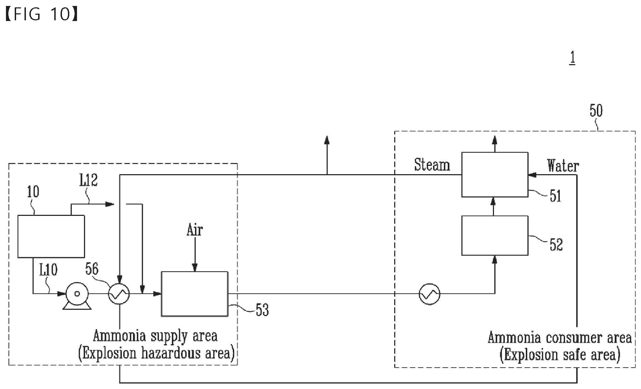

FIG. 10 is a conceptual diagram of a fuel processing system according to a tenth embodiment of the present disclosure.

Referring to FIG. 10, the fuel processing system 1 according to the tenth embodiment of the present disclosure may include the preheater 56 provided upstream of the mixer 53, in contrast with the ninth embodiment.

The preheater 56 may preheat ammonia introduced into the mixer 53 by using steam generated by the boiler 50. The ammonia preheated by the preheater 56 may be liquid ammonia discharged from the fuel storage tank 10 and may be at least a portion of ammonia to be supplied to the fuel supply unit 20.

In addition, the preheater 56 may, unlike the illustration, preheat gaseous ammonia delivered from the fuel storage tank 10 or the pressure control unit 11. In this case, the gaseous transmission line L12 may merge with liquid ammonia upstream of the preheater 56. That is, the gaseous transmission line L12 is connected to the fuel supply line L10 upstream of the preheater 56.

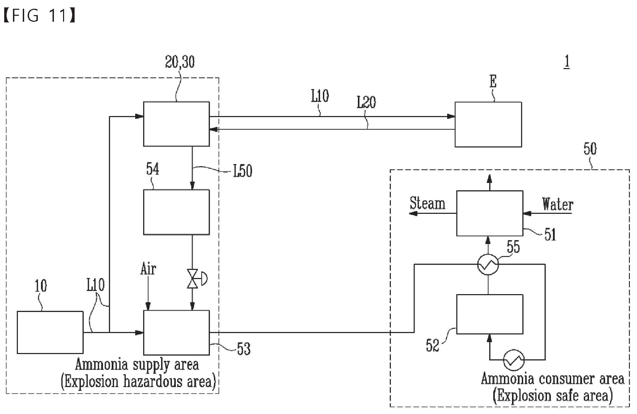

FIG. 11 is a conceptual diagram of a fuel processing system according to an eleventh embodiment of the present disclosure.

Referring to FIG. 11, a fuel processing system 1 according to an eleventh embodiment of the present disclosure may include a buffer tank 54 that receives ammonia delivered from at least a portion of the fuel supply unit 20 and the fuel recovery unit 30, and delivers the ammonia to the mixer 53 or the boiler 50.

Although the present embodiment is similar to the eighth embodiment in that the buffer tank 54 delivers ammonia to the mixer 53, the eighth embodiment utilizes ammonia discharged during a normal stop or an emergency stop, whereas the present embodiment may utilize ammonia included in purging gas discharged during purging.

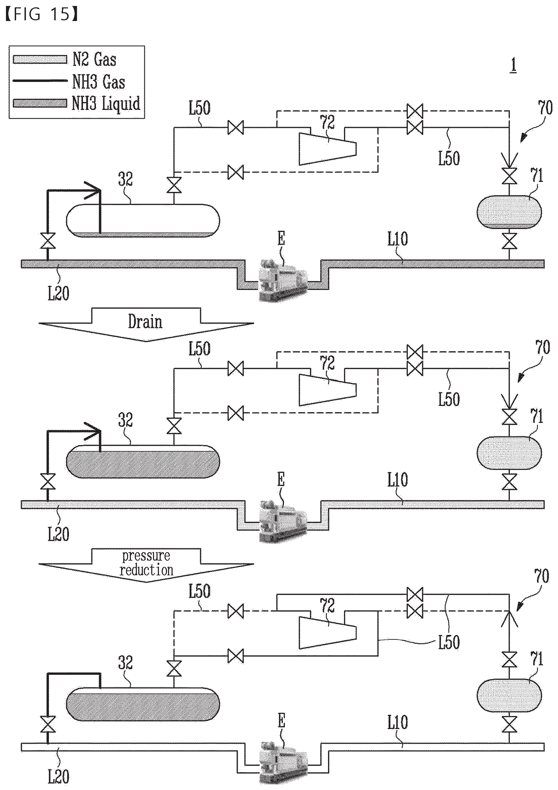

As will be described below with reference to FIG. 15, the present disclosure may include a purging unit 70. The purging unit 70 purges the fuel supply unit 20 and the fuel recovery unit 30 by using a purging gas, which is a nonexplosive gas such as an inert gas or nitrogen.

During the purging process, ammonia remaining in at least a portion of the fuel supply unit 20 and the fuel recovery unit 30 is discharged together with the purging gas, and the discharged purging gas containing ammonia may be delivered to the buffer tank 54.

The purging gas/ammonia delivered to the buffer tank 54 may be supplied from the collecting tank 32 provided in the fuel recovery unit 30. Since the collecting tank 32 maintains a certain pressure (around 20 bar), when its internal pressure rises above that level during purging, ammonia and purging gas may be discharged. To prevent overpressure, the ammonia/purging gas discharged from the collecting tank 32 may be delivered to the buffer tank 54. By supplying the ammonia received from the collecting tank 32 to the boiler 50, the buffer tank 54 enables the collecting tank 32 to maintain a stable pressure even during purging.

However, in the present embodiment, the buffer tank 54 may be omitted, in which case the ammonia/purging gas discharged from the collecting tank 32 for relieving overpressure may be delivered directly to the mixer 53. At this time, the mixer 53 may dilute a smaller flow rate of air compared to the other embodiments, in consideration of the fact that the ammonia has already been diluted by the purging gas.

In addition, in the present embodiment, when the buffer tank 54 is omitted, ammonia discharged from the collecting tank 32 is transmitted to the fuel processing unit 60, and ammonia water collected in the fuel processing unit 60 may be transmitted to the mixer 53. For reference, the ammonia water may be supplied to the mixer 53 after water is separated through vaporization processing, which will be described later.

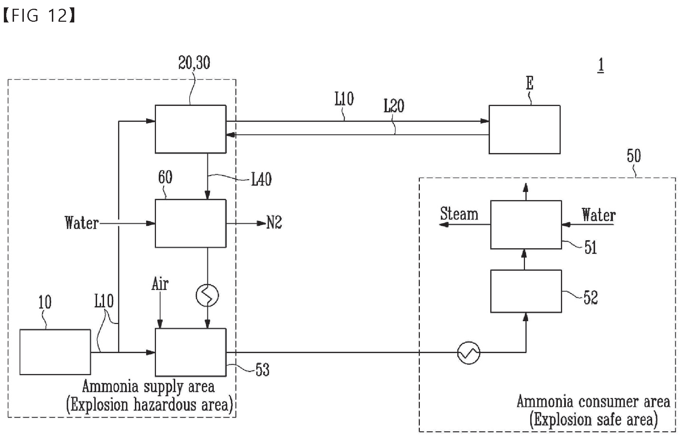

FIG. 12 is a conceptual diagram of a fuel processing system according to a twelfth embodiment of the present disclosure.

Referring to FIG. 12, the fuel processing system 1 according to the twelfth embodiment of the present disclosure supplies ammonia to the boiler 50 by using the fuel processing unit 60.

The fuel processing unit 60 may receive and collect ammonia discharged from the fuel supply unit 20 and the fuel recovery unit 30. The fuel processing unit 60 may collect the ammonia in the form of ammonia water by dissolving the ammonia in water.

At this time, the ammonia water generated by the fuel processing unit 60 is supplied to the mixer 53 or the boiler 50. However, in the present embodiment, instead of directly transmitting the mixture of ammonia and water to the mixer 53, water may be removed so that only ammonia is transmitted to the mixer 53.

To this end, a dryer (reference numeral not shown) may be provided between the fuel processing unit 60 and the mixer 53, and the dryer may have a vaporization function, as described above with reference to the eighth embodiment.

Accordingly, the ammonia discharged from the fuel supply unit 20 or the like and delivered to the fuel processing unit 60 takes the form of ammonia water in which ammonia is dissolved in water, but is delivered to the mixer 53 after the water is removed by vaporization or the like.

In addition, in the present embodiment, when the inside of the engine E is urgently purged in an Emergency Shutdown (ESD) state, if a line or valve for recovering to the collecting tank 32 fails and does not allow the flow of ammonia, the purging gas may be sent to the fuel processing unit 60, and the fuel processing unit 60 may collect ammonia.

That is, in the present embodiment, the fuel processing unit 60 may collect ammonia discharged from the fuel supply unit 20 or the like when the system stops and transmit the ammonia to the mixer 53, or may collect ammonia/purging gas discharged from the fuel recovery unit 30 or the like during system purging and transmit it to the mixer 53.

For reference, although the present specification distinguishes and indicates the lines through which ammonia flows during discharge and the lines through which ammonia flows during purging, the discharge line L40 and the purging line L50 may share at least a portion thereof. That is, as described above, the ammonia delivered through the discharge line L40 or the purging line L50 may be transmitted to the mixer 53 via the fuel processing unit 60, and conversely, the collecting tank 32 may also perform the function of transmitting ammonia delivered through the discharge line L40, in addition to the purging line L50, to the mixer 53.

In the present specification, discharge is a process of removing ammonia remaining in lines through which ammonia flows, and purging is a process of cleaning lines through which ammonia flows using an inert gas, and purging may be performed consecutively after discharge.

In this case, in the discharge process, ammonia is delivered to the fuel processing unit 60 for reuse as fuel, whereas in the purging process, ammonia may be delivered to the collecting tank 32 for discharge processing. However, as mentioned above, the present disclosure may freely modify these configurations.

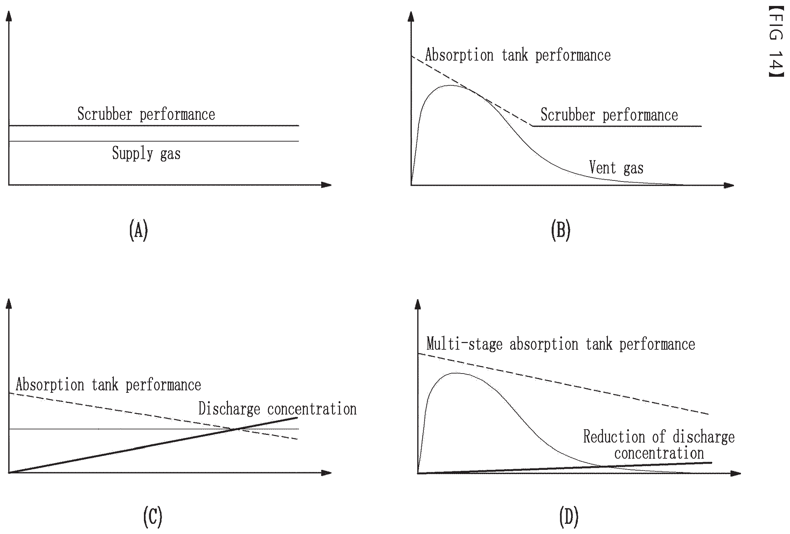

FIGS. 13 and 14 are conceptual diagrams of a fuel processing system according to a thirteenth embodiment of the present disclosure.

FIG. 13 is a conceptual diagram illustrating various forms of the fuel processing unit 60 that the fuel processing system 1 according to the thirteenth embodiment of the present disclosure may include, and FIG. 14 compares the performance of the fuel processing units 60 shown in FIG. 13.

Referring to FIGS. 13 and 14, a fuel processing system 1 according to the thirteenth embodiment of the present disclosure may include, as the fuel processing unit 60, at least one of a scrubber 61 and an absorption tank 62. This has been described above with reference to FIG. 1 and the like.

The fuel processing unit 60 collects ammonia discharged from the fuel supply unit 20, the fuel recovery unit 30, or the like during discharge or purging. Because ammonia is a toxic substance, discharge of ammonia in excess of a certain concentration into the atmosphere is prohibited. Accordingly, the fuel processing unit 60 collects the ammonia discharged from the fuel supply unit 20 or the like to prevent atmospheric release.

Since ammonia is soluble in water, the fuel processing unit 60 may collect ammonia by using water. The fuel processing unit 60 uses at least one of a method of spraying water onto ammonia or a method of injecting ammonia into water.

To use the former method, the fuel processing unit 60 may include a scrubber 61, and to use the latter method, the fuel processing unit 60 may include an absorption tank 62.

As shown in FIG. 13(A), the scrubber 61 includes a space into which ammonia is introduced and is able to spray water into the space. When water is sprayed onto ammonia, the ammonia dissolves in the water and is converted into ammonia water. Accordingly, the scrubber 61 may generate ammonia water at its lower portion, and the ammonia water is discharged through an outlet at the lower portion of the scrubber 61.

As shown in FIG. 14(A), when the ammonia flow rate is constant, the scrubber 61 may exhibit constant ammonia collection performance; however, when the ammonia flow rate changes and the flow rate of water introduced into the scrubber 61 does not properly vary, the ammonia collection performance may decrease. That is, the scrubber 61 may be used when the flow rate of ammonia is constant.

In other words, when the flow rate of water sprayed inside the scrubber 61 is kept constant, the scrubber 61 has a drawback in that its performance becomes inconsistent when the injection flow rate of ammonia varies. Conversely, adjusting the amount of water sprayed in consideration of the ammonia injection flow rate is not easy and is also undesirable in terms of cost.

The absorption tank 62 stores a predetermined amount of water therein, as shown in FIG. 13(C). Ammonia may be injected toward the water of the absorption tank 62, and the injected ammonia dissolves in the water. Accordingly, the water stored in the absorption tank 62 becomes ammonia water, and the ammonia concentration of the ammonia water may gradually increase depending on the amount of injected ammonia.

Since the absorption tank 62 utilizes a certain amount of stored water, the absorption performance inevitably decreases as the ammonia injection amount increases, as shown in FIG. 14(C), because the ammonia concentration inside the tank increases. Thus, unless the water in the absorption tank 62 is continuously circulated, the absorption tank 62 has a limitation in its ammonia absorption capability. Accordingly, when ammonia having a concentration above a certain level is absorbed, the absorption tank 62 may need to discard the ammonia water inside and be refilled with fresh water.

The fuel processing unit 60 may have an integrated structure in which the scrubber 61 and the absorption tank 62 are combined, as shown in FIG. 13(B), so as to eliminate the respective drawbacks of the scrubber 61 and the absorption tank 62 described above.

In this case, the scrubber 61 is provided at an upper portion, and the absorption tank 62 is provided at a lower portion. Ammonia is injected into the water stored in the absorption tank 62. When the ammonia collection performance of the ammonia water inside the absorption tank 62 decreases, ammonia that is not absorbed in the absorption tank 62 moves upward, and in this case, the ammonia may be additionally collected by the water sprayed from the scrubber 61.

In the case of the integrated scrubber 61 and absorption tank 62, the initial high flow rate of ammonia may be accommodated through the absorption tank 62, as shown in FIG. 14(B). In addition, although the ammonia absorption performance decreases after the initial stage when only the absorption tank 62 is used, the scrubber 61 may supplement the ammonia absorption performance after the initial stage.

By providing the scrubber 61 and the absorption tank 62 in an integrated manner, both large-capacity absorption of ammonia using the absorption tank 62 and continuous collection of ammonia using the scrubber 61 may be achieved. However, in order for the scrubber 61 to be used in combination, the absorption tank 62 has a limitation in that it must be prepared in a large capacity in consideration of the amount of water sprayed from the scrubber 61.

To improve this, the fuel processing unit 60 may include a plurality of absorption tanks 62, as shown in FIG. 13(D). That is, the fuel processing unit 60 includes a plurality of absorption tanks 62 that collect ammonia by using water to generate ammonia water.

The plurality of absorption tanks 62 may be provided in multiple stages. Accordingly, the ammonia discharged from the fuel supply unit 20 or the like sequentially passes through the plurality of absorption tanks 62. That is, the ammonia may dissolve into the absorption tank 62 provided upstream among the plurality of absorption tanks 62 and be converted into ammonia water, or may dissolve into the absorption tank 62 provided downstream and be converted into ammonia water.

Therefore, the plurality of absorption tanks 62 may have relatively lower ammonia concentrations from upstream toward downstream based on the flow of ammonia discharged from the fuel supply unit 20 or the fuel recovery unit 30.

The plurality of absorption tanks 62 may be stacked in a height direction so that gas not absorbed in a lower absorption tank 62 is delivered to an upper absorption tank 62. For this purpose, the upper portion of any one absorption tank 62 may be provided with a line (reference numeral not shown) that delivers ammonia into the water of another absorption tank 62 provided above it. Such a line may sequentially and continuously connect the absorption tanks 62.

For example, the plurality of absorption tanks 62 may include a first absorption tank 62 in which water is stored and into which ammonia discharged from the fuel supply unit 20 or the fuel recovery unit 30 flows as water, and a second absorption tank 62 provided above the first absorption tank 62. Like the first absorption tank 62, the second absorption tank 62 also stores water, and gas not absorbed in the water of the first absorption tank 62 may flow into the second absorption tank 62.

In addition, the fuel processing unit 60 may include an nth absorption tank 62. The nth absorption tank 62 may be the second absorption tank 62 or the third absorption tank 62, and in the example of the drawing, may be the sixth absorption tank 62.

The nth absorption tank 62 stores water therein and receives gas that is not absorbed in the water of at least the first absorption tank 62 among the first absorption tank 62 and the second absorption tank 62. In other words, the nth absorption tank 62 may receive gaseous ammonia that is not collected in the (n-1)th absorption tank 62.

Since the fuel processing unit 60 may include a total of n absorption tanks 62, gaseous ammonia that is not absorbed into the water in the nth absorption tank 62 may be discharged into the atmosphere at a concentration below a predetermined threshold. That is, the fuel processing unit 60 includes the first absorption tank 62 through the nth absorption tank 62, and the nth absorption tank 62 constitutes a final stage of ammonia collection. Accordingly, the nth absorption tank 62 must independently handle ammonia that is not collected, and in this case, gaseous ammonia is discharged from the nth absorption tank 62 into the atmosphere within an allowable range for atmospheric release.

The plurality of absorption tanks 62 included in the fuel processing unit 60 may be provided to be individually separable. The plurality of absorption tanks 62 may be stacked in a vertical direction or, if there is no issue with the transfer of gaseous ammonia, may alternatively be arranged in a direction other than vertical.

Alternatively, the plurality of absorption tanks 62 may be arranged spaced apart from each other without being structurally in contact or connected, and may be connected only through lines so that they are easily separable from each other.

In this case, each absorption tank 62 is provided to be individually disposable. That is, the first absorption tank 62 arranged at the most upstream side of the fuel processing unit 60 reaches a predetermined ammonia concentration earlier than the second absorption tank 62 arranged downstream thereof. If the internal ammonia concentration of the first absorption tank 62 rises to a level requiring disposal, the first absorption tank 62 may be separated from the second absorption tank 62 and disposed of independently.

In this case, ammonia discharged from the fuel supply unit 20 or the like may be directly introduced into the second absorption tank 62. For this purpose, the discharge line L40 may be separated from the first absorption tank 62 when the first absorption tank 62 is removed and may be connected to the second absorption tank 62.

Alternatively, the discharge line L40 may be connected to each of the first absorption tank 62 through the nth absorption tank 62, and opened only toward the first absorption tank 62, and upon disposal of the first absorption tank 62, the flow to the first absorption tank 62 may be shut off and switched to be opened only toward the second absorption tank 62.

When a plurality of absorption tanks 62 are used as described above, the overall ammonia absorption performance may gradually decrease, as shown in FIG. 14(D), but initial large-volume ammonia collection can be carried out without difficulty.

In addition, the ammonia concentration differs for each absorption tank 62, and when a high-concentration absorption tank 62 is disposed of, the overall ammonia concentration in the fuel processing unit 60 is reduced. Accordingly, the fuel processing unit 60 may ensure stable ammonia collection until all the absorption tanks 62 are disposed of.

Thus, the fuel processing unit 60 adopting the configuration of FIG. 13(D) resolves the conventional issue in which the ammonia collection performance sharply deteriorates when the ammonia concentration of the water stored in the absorption tanks 62 increases.

FIG. 15 is a conceptual diagram of a fuel processing system according to a fourteenth embodiment of the present disclosure.

Referring to FIG. 15, the fuel processing system 1 according to the fourteenth embodiment of the present disclosure includes a purging unit 70 configured to perform purging by using the collecting tank 32.

The purging unit 70 injects a purging gas, such as an inert gas or nitrogen, into purging-target sections located before and after the engine E. The purging-target sections may include portions between the FVT and the engine E, portions upstream of the SVT, and portions downstream of the RVT, but are not particularly limited thereto.

The purging unit 70 injects the purging gas into the fuel supply unit 20 so that ammonia remaining in the purging-target sections is removed. The purging gas injected into the fuel supply unit 20 flows together with ammonia remaining in the fuel supply unit 20, passes through the engine E, and then moves to the fuel recovery unit 30. Thereafter, the purging gas and ammonia may be introduced into the collecting tank 32 provided in the fuel recovery unit 30.

The collecting tank 32 stores the purging gas and ammonia and may discharge them when necessary. The collecting tank 32 may allow ammonia to be released into the atmosphere in a state in which its concentration is below a predetermined level. In this case, the ammonia discharged from the collecting tank 32 may be released to the atmosphere through a discharge mast.

Meanwhile, ammonia introduced into the collecting tank 32 during purging may be delivered to the fuel processing unit 60 to be treated. In this case, the fuel processing unit 60 receives the purging gas and ammonia introduced into the collecting tank 32 and absorbs the ammonia into water. Thereafter, as described with reference to FIG. 8, the fuel processing unit 60 may supply the resulting ammonia water to the boiler 50 or the like.

Ammonia may be delivered directly from the collecting tank 32 to the discharge mast, or may be delivered to the atmosphere after passing through the fuel processing unit 60 from the collecting tank 32. The fuel processing unit 60 collects ammonia by using water to generate ammonia water and may discharge ammonia to the outside at a concentration below a predetermined level, as previously described with reference to FIG. 13.

However, the present embodiment may suppress or omit atmospheric discharge of ammonia through the collecting tank 32 or the fuel processing unit 60 by utilizing a purging drum 71 and a purging compressor 72 provided in the purging unit 70.

The purging drum 71 supplies the purging gas to the fuel supply unit 20. The purging drum 71 may be arranged between the purging compressor 72 and the fuel supply unit 20, and temporarily stores the purging gas compressed by the purging compressor 72 and then injects it into the fuel supply unit 20.

The purging compressor 72 compresses the purging gas. Specifically, the purging compressor 72 compresses purging gas and injects the compressed purging gas into the fuel supply unit 20 so that ammonia remaining in the purging-target section before and after the engine E is delivered to the collecting tank 32.

To this end, the purging unit 70 includes a purging line L50. The purging line L50 connects the collecting tank 32 and the purging compressor 72, is connected from the purging compressor 72 to the fuel supply unit 20 so that the purging gas is introduced into the fuel supply unit 20, and may also be connected from the fuel recovery unit 30 to the purging compressor 72 via the collecting tank 32.

In addition, when purging of the purging-target section is completed, the purging compressor 72 suctions the purging gas injected into the purging-target section and delivers it to the collecting tank 32. To this end, the purging line L50 may be connected from the fuel recovery unit 30 to the collecting tank 32 via the purging compressor 72.

That is, the purging unit 70 of the present embodiment may switch the flow of the purging gas to and from the purging-target section and the collecting tank 32 before and after purging. For example, during purging, the purging compressor 72 compresses the purging gas stored in the collecting tank 32. The purging compressor 72 delivers the compressed purging gas to the purging drum 71, and the purging gas introduced into the purging drum 71 is injected into the fuel supply unit 20. In this case, the ammonia remaining in the purging-target section is delivered to the collecting tank 32 together with the purging gas. This is identical to what is shown in the upper and middle portions of FIG. 15.

After purging of the purging-target section is completed, the inflow from the fuel recovery unit 30 to the collecting tank 32 is blocked by a valve or the like. At this time, as shown in the lower portion of FIG. 15, the purging compressor 72 suctions the purging gas stored in the purging-target section and the purging drum 71 and delivers the purging gas to the collecting tank 32.

Accordingly, before purging, the collecting tank 32 stores purging gas, and during purging, the collecting tank 32 receives and stores ammonia that remained in the purging-target section. In this case, as much ammonia is filled in as the purging gas is discharged, so the internal pressure may remain constant or may increase slightly.

Once purging is completed, the collecting tank 32 stores the purging gas in addition to the ammonia previously stored therein. In this situation, the collecting tank 32 may become somewhat pressurized, while the purging-target section may become depressurized due to suction of the purging gas by the purging compressor 72.

After the purging is completed, when all of the purging gas has been delivered to the collecting tank 32, the purging gas remaining in the purging target section is recovered to the collecting tank 32, and thereafter, the ammonia stored in the collecting tank 32 is reused as fuel for the engine E. Thus, the collecting tank 32 returns to a state in which it primarily stores purging gas, thereby becoming ready for another purging operation.

In such a case, the present embodiment enables smooth execution of purging for the purging-target section without the need for atmospheric release through the above-mentioned discharge mast.

To achieve this, the purging line L50 is configured to allow both forward and reverse flow between the purging compressor 72, the collecting tank 32, and the purging drum 71. For example, the purging line L50 is configured to selectively implement a first flow from the collecting tank 32 to the purging drum 71 via the purging compressor 72 and a second flow from the purging drum 71 to the collecting tank 32 via the purging compressor 72.

That is, the purging line L50 may implement the first flow in which an inlet end of the purging compressor 72 is connected to the collecting tank 32 and a discharge end of the purging compressor 72 is connected to the purging drum 71. Alternatively, the purging line L50 may implement the second flow in which the inlet end of the purging compressor 72 is connected to the purging drum 71 and the discharge end of the purging compressor 72 is connected to the collecting tank 32.

In the first flow, the purging gas stored in the collecting tank 32 is suctioned into the purging compressor 72, compressed, and then injected into the purging-target section through the purging drum 71. At this time, the ammonia remaining in the purging-target section flows into the collecting tank 32.

In contrast, in the second flow, the purging gas in the purging-target section is suctioned into the purging compressor 72 through the purging drum 71, compressed, and then introduced into the collecting tank 32. In this case, since the collecting tank 32 already contains residual ammonia, the internal pressure may slightly increase as purging gas is additionally supplied.

According to the present embodiment, ammonia may be discharged at a safe level to the discharge mast through the fuel processing unit 60 from the collecting tank 32 during purging. Alternatively, the present embodiment may utilize the purging compressor 72, the purging drum 71, and the collecting tank 32 to recover both the purging gas and the residual ammonia from the purging-target section and route them to the collecting tank 32. Accordingly, the present embodiment may omit or minimize the delivery of ammonia from the collecting tank 32 to the discharge mast.

The present disclosure encompasses not only the embodiments described above, but also all embodiments derived from combinations of the above embodiments and combinations of at least one of the embodiments with known technologies.

Although the present disclosure has been described in detail through specific embodiments, these embodiments are provided merely for illustrative purposes. The present disclosure is not limited thereto, and it will be apparent that various modifications and improvements may be made by those skilled in the art within the technical spirit of the present disclosure.

Simple modifications or alterations of the present disclosure all fall within the scope of the present disclosure, and the specific scope of protection of the present disclosure will be clarified by the appended claims.

## Claims

1. A fuel processing system comprising:
a fuel supply unit configured to supply fuel discharged from a fuel storage tank to a consumer;
a fuel recovery unit configured to recover excess fuel returned from the consumer; and
a fuel processing unit configured to collect fuel vented from the fuel supply unit or the fuel recovery unit,
wherein the fuel processing unit comprises a plurality of absorption tanks configured to generate waste water by collecting fuel by using water, and
wherein the fuel vented from the fuel supply unit or the fuel recovery unit sequentially passes through the plurality of absorption tanks and is dissolved in water stored in the absorption tanks and converted into the waste water.

2. The fuel processing system according to claim 1,
wherein the plurality of absorption tanks have relatively lower fuel concentrations from upstream to downstream based on a flow of the fuel vented from the fuel supply unit or the fuel recovery unit.

3. The fuel processing system according to claim 1,
wherein the plurality of absorption tanks are stacked in a height direction and are provided to be separable from one another.

4. The fuel processing system according to claim 1,
wherein the plurality of absorption tanks comprises:
a first absorption tank in which water is stored and fuel vented from the fuel supply unit or the fuel recovery unit is introduced; and
a second absorption tank in which water is stored and gas that is not absorbed into the water stored in the first absorption tank is introduced.

5. The fuel processing system according to claim 4,
wherein the first absorption tank is provided below the second absorption tank and is separated with reference to the second absorption tank when the fuel concentration in the waste water becomes greater than or equal to a predetermined level.

6. A fuel processing system comprising:
a fuel supply unit configured to supply fuel discharged from a fuel storage tank to an engine;
a fuel recovery unit configured to recover excess fuel returned from the engine; and
a purging unit configured to purge the fuel supply unit and the fuel recovery unit,
wherein the fuel recovery unit includes a collecting tank configured to store at least a portion of the excess fuel returned from the engine,
wherein the purging unit includes a purging compressor configured to compress purging gas, and
wherein the purging compressor is configured to compress the purging gas and inject the compressed purging gas into the fuel supply unit so that fuel remaining in a purging-target section before and after the engine is delivered to the collecting tank.

7. The fuel processing system according to claim 6,
wherein the purging compressor is configured to, upon completion of purging of the purging-target section, perform suction of the purging gas injected into the purging-target section and deliver the purging gas to outside the purging-target section.

8. The fuel processing system according to claim 7,
wherein the purging compressor is configured to, upon completion of purging of the purging-target section, perform suction of the purging gas injected into the purging-target section and deliver the purging gas to the collecting tank.

9. The fuel processing system according to claim 6,
wherein the purging unit further includes a purging drum configured to deliver the purging gas to the fuel supply unit,
wherein the purging compressor is configured to compress the purging gas stored in the collecting tank and inject the compressed purging gas into the fuel supply unit through the purging drum so that fuel remaining in the purging-target section is delivered to the collecting tank, and
wherein, upon completion of purging of the purging-target section and in a state in which inflow from the fuel recovery unit to the collecting tank is blocked, the purging compressor is configured to perform suction of the purging gas stored in the purging-target section and the purging drum and deliver the purging gas to the collecting tank.

10. A fuel processing system comprising:
a fuel supply unit configured to supply fuel discharged from a fuel storage tank to a consumer; and
a boiler configured to generate steam by using the fuel,
wherein the boiler includes an oxidation catalyst and is configured to convert water into steam by utilizing an oxidation exothermic reaction of the fuel.

11. The fuel processing system according to claim 10, further comprising:
a fuel recovery unit configured to recover excess fuel returned from the consumer,
wherein at least one of the fuel supply unit and the fuel recovery unit supplies the fuel to the boiler.

12. The fuel processing system according to claim 10,
wherein the fuel recovery unit includes a collecting tank configured to store at least a portion of the excess fuel returned from the consumer, and
the collecting tank supplies at least a portion of the excess fuel introduced therein to the boiler.

13. The fuel processing system according to claim 10, further comprising:
a mixer configured to mix air with the fuel supplied to the boiler and deliver the mixture to the boiler.

14. The fuel processing system according to claim 13,
wherein the mixer dilutes the fuel with air to a concentration less than or equal to a lower explosion limit and supplies the diluted fuel to the boiler, and
wherein the boiler is provided as a non-explosion-proof specification.

15. A ship comprising the fuel processing system according to claim 1.
